# EUROPÄISCHE PATENTANMELDUNG

(11) **EP 1 862 351 A2**
(43) Veröffentlichungstag der Anmeldung: **05.12.2007**
(21) Anmeldenummer: 07010190.2
(22) Anmeldetag: 23.05.2007
(51) Int. Cl.: B60N 2/02

(54) **Stellantrieb, insbesondere für Sitzeinstelleinrichtungen**

(30) Priorität: 03.06.2006 DE 102006026100
(71) Anmelder: Bühler Motor GmbH, 90459 Nürnberg (DE)
(72) Erfinder: Weber, Stefan, 91207 Lauf (DE)

(57) **Zusammenfassung**

Die Erfindung betrifft einen Stellantrieb, insbesondere für Sitzeinstelleinrichtungen, mit zumindest einem Elektromotor mit nachgeordnetem Untersetzungsgetriebe und einer Auskupplungsvorrichtung für Handbetrieb. Aufgabe der vorliegenden Erfindung ist es einen gattungsgemäßen Stellantrieb mit einer Auskupplungsvorrichtung bereitzustellen, die für eine große Anzahl unterschiedlicher Einsatzfälle und Einbaubedingungen verwendbar ist und über alle Verfahrwege eine zuverlässige Funktion der Kupplungsvorrichtung gewährleistet, ohne überdimensioniert und damit unwirtschaftlich zu sein. Diese Aufgabe wird erfindungsgemäß dadurch gelöst, dass die Auskupplungsvorrichtung (4) eine Kupplungseinrückfeder (12) aufweist, welche die Ausrastkraft der Auskupplungsvorrichtung (4) bestimmt und dass eine Rückstellfeder (33) vorgesehen ist, welche die Rückstellung eines Betätigungsmittels (30) bewirkt.

## Beschreibung

Die Erfindung betrifft einen Stellantrieb, insbesondere für Sitzeinstelleinrichtungen, mit zumindest einem Elektromotor mit nachgeordnetem Untersetzungsgetriebe und einer Auskupplungsvorrichtung für Handbetrieb.

Elektrische Stellantriebe dienen dem Komfort oder der Verstellung von unzugänglichen Stellgliedern. Im Falle eines Spannungsausfalls oder sonstigen Defekts sollen Stellglieder von Hand einstellbar sein; das ist in der Regel auch bei Sitzelementen der Fall. Da Stellantriebe gewöhnlich hochuntersetzende, zum Teil selbsthemmende, Untersetzungsgetriebe aufweisen, um das erforderliche Stellmoment aufzubringen, ist eine Handverstellung nur mit Hilfe einer Kupplung zwischen dem Elektromotor und dem Untersetzungsgetriebe oder innerhalb des Untersetzungsgetriebes möglich.

Aus der DE-OS 102 30 591 A1 ist ein Stellantrieb für Sitzeinstelleinrichtungen bekannt, bei dem der Antriebspfad zwischen einem Elektromotor und einem Ausgangsmittel des Stellantriebs von Hand unterbrechbar ist, wobei ein Seilzug die Kraft eines handbetätigten Hebels auf eine Auskupplungsvorrichtung überträgt, die im elektromotorischen Betrieb ein Hohlrad eines Planetengetriebes gegen Verdrehung sperrt und die Verdrehung bei Handbetätigung zulässt.

Die bekannte Auskupplungsvorrichtung umfasst eine einzige Rückstellfeder, die einerseits die eingerastete Position der Auskupplungsvorrichtung aufrecht zu erhalten sucht und für eine Rückstellung des handbetätigten Hebels sorgt. Da derartige Auskupplungsvorrichtungen aus wirtschaftlichen Gründen nicht für einen einzigen Anwendungsfall konzipiert sind, sondern an eine Vielzahl von Einbaugeometrien anpassbar sein sollen, muss die Auskupplungsvorrichtung für alle zu erwartenden Kräfte ausgelegt sein. Seilzüge haben die Eigenheit, dass sich die aus einer Seilführung vorragende Seillänge je nach Anzahl und Betrag von Biegungswinkeln im Seilverlauf ändert. Diese Längenänderung führt zu einer teilweisen Ausrückung der Auskupplungsvorrichtung, so dass bei ungünstigen Bedingungen das Hohlrad ohne Betätigung des handbetätigten Hebels freigegeben sein kann, während es bei anderen Einbaugeometrien sicher gesperrt ist. Durch unterschiedliche Biegewinkel werden zudem die Reibungsverhältnisse des Seilzugs beeinflusst, so dass auch die Einrückkraft, welche die Rückstellfeder speichert nicht für jeden Einsatzfall für ein sicheres Einrücken der Auskupplungsvorrichtung ausreicht. Bei Anwendungen, bei denen mit der Verstellung auch das Zugseil des Bowdenzuges der Bewegung folgt, kann es zu Situationen kommen, in denen die Kupplung auskuppelt. Dadurch würde der Stellantrieb unwirksam werden.

Daher ist es Aufgabe der vorliegenden Erfindung einen gattungsgemäßen Stellantrieb mit einer Auskupplungsvorrichtung bereitzustellen, die für eine große Anzahl unterschiedlicher Einsatzfälle und Einbaubedingungen verwendbar ist und über alle Verfahrwege eine zuverlässige Funktion der Kupplungsvorrichtung gewährleistet, ohne überdimensioniert und damit unwirtschaftlich zu sein.

Diese Aufgabe wird erfindungsgemäß dadurch gelöst, dass die Auskupplungsvorrichtung (4) eine Kupplungseinrückfeder (12) aufweist, welche die Ausrastkraft der Auskupplungsvorrichtung (4) bestimmt und dass eine Rückstellfeder (33) vorgesehen ist, welche die Rückstellung eines Betätigungsmittels (30) bewirkt. Durch die Verwendung einer zusätzlichen Feder, kann eine Unabhängigkeit zwischen einer Einrückbewegung der Auskupplungsvorrichtung (4) und einer Rückstellung des Betätigungsmittels (30) erreicht werden, wodurch die Einrückkräfte der Kupplung unabhängig vom Einsatzort und von der Einsatzart sind.

Weiterbildungen der Erfindung werden in den Unteransprüchen dargestellt. Bei einer besonders bevorzugte Ausführungsform der Erfindung ist das Betätigungsmittel (30) über eine Freibewegungseinrichtung (31) mit der Auskupplungsvorrichtung (4) wirkverbunden. Durch diese Anordnung wird zusätzlich erreicht, dass Bewegungen oder Anordnungen des Bowdenzuges keinen Einfluss auf die Auskupplungsvorrichtung, insbesondere auf Kupplungsmittel haben. So können auch bei Mitbewegung des Bowdenzuges während der Verstellung keine versehentlichen ungewollten Unterbrechungen der Stellbewegung erfolgen, weil der Freiraum einen Ausgleich einer möglichen Längenänderung des Zugseiles ausgleichen kann.

Es ist vorgesehen die Freibewegungseinrichtung (31) als Freischwenkeinrichtung auszubilden, wobei die Freischwenkeinrichtung aus einem Zughebel (11) und einem Mitnahmehebel (28) besteht die eine gemeinsame Schwenkachse aufweisen.

Ein besonders einfacher Aufbau ergibt sich, wenn ein Zugseil (27) eines Bowdenzuges (10) einerseits mit dem Zughebel (11) und andererseits mit dem Betätigungsmittel (30) verbunden ist, insbesondere, wenn die Rückstellfeder (33) durch das Zugseil (27) des Bowdenzuges (10) geführt ist. Hierdurch kann die Längsachse der Rückstellfeder auch eine Bogenform beschreiben ohne seine Wirksamkeit einzuschränken. Bei dieser Anordnung stützt sich die Rückstellfeder (33) einerseits am Zughebel (11) und andererseits an einer gehäusefesten Abstützfläche (32) ab.

Analog zum Stand der Technik ist in einer Ausführungsform der Erfindung vorgesehen, dass ein Gegenkupplungsmittel (8) zu einem Kupplungsmittel (7) der Auskupplungsvorrichtung (4) um die Schwenkachse (19) schwenkbar gelagert ist. Diese Anordnung ist einfach zu realisieren und erlaubt einen zuverlässigen Betrieb der Auskupplungsvorrichtung (4). Die schwenkbare Lagerung des Gegenkupplungsmittels (8) erlaubt eine Vielzahl von möglichen Einbauorten für die Kupplungseinrückfeder.

Es wird bevorzugt, dass sich die Kupplungseinrückfeder (12) einerseits an einem über eine Kupplungswelle (18) mit dem Mitnahmehebel (28) verbundenen oder einstückigen Abstützmittel (24) und andererseits an einer Gehäusefesten Abstützfläche abstützt. Die Kupplungseinrückfeder kann dabei auf einem Aufnahmedorn (13) aufgenommen sein.

Alternativ besteht die Möglichkeit, dass sich die Kupplungseinrückfeder (12) einerseits am Mitnahmehebel (28) und andererseits an einer gehäusefesten Abstützfläche (32) abstützt.

Zweckmäßigerweise eignet sich für die Kupplungseinrückfeder (12) eine Druckfeder, eine Schenkelfeder oder eine Spiralfeder.

Für die Rückstellfeder (33) wird vorzugsweise eine Druckfeder eingesetzt.

Ein Ausführungsbeispiel der Erfindung wird nachfolgend anhand der Zeichnung näher erläutert. Es zeigen:
Fig. 1 eine Auskupplungsvorrichtung nach dem Stand der Technik
Fig. 2 einen Stellantrieb mit einer entsprechenden Auskupplungsvorrichtung nach dem Stand der Technik,
Fig. 3a eine schematische Darstellung einer erfindungsgemäßen Auskupplungsvorrichtung in einem Normalbetriebszustand,
Fig. 3b eine schematische Darstellung der erfindungsgemäßen Auskupplungsvorrichtung in einem Zwischenzustand,
Fig. 3c eine schematische Darstellung der erfindungsgemäßen Auskupplungsvorrichtung in einem ausgekuppelten Zustand und bei angezogenem Betätigungsmittel und
Fig. 3d eine schematische Darstellung der erfindungsgemäßen Auskupplungsvorrichtung in einem ausgekuppelten Zustand und bei zurückgestelltem Betätigungsmittel.

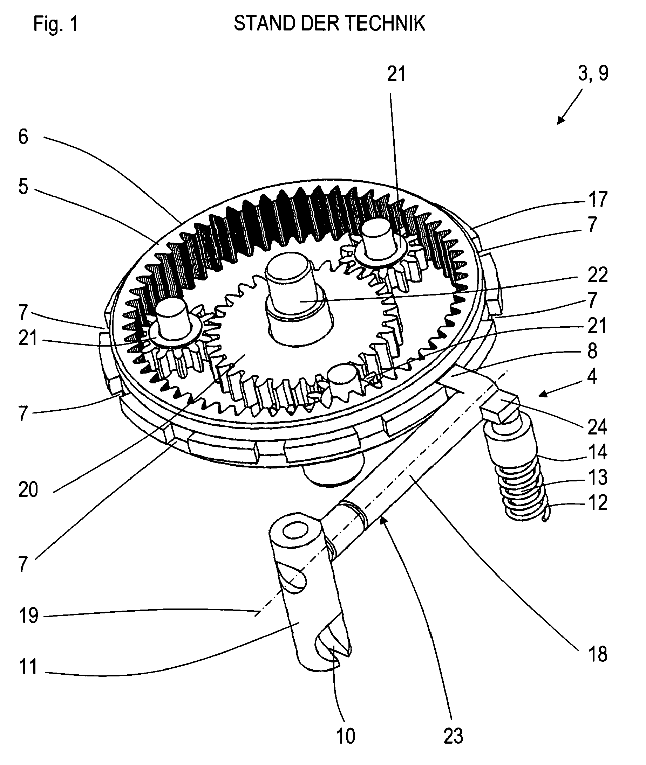

Fig. 1 zeigt Teile eines Stellantriebs 1 nach dem Stand der Technik, mit einem Planetengetriebe 9, bestehend aus einem auf einer Welle 22 befestigten Sonnenrad 20, Planetenrädern 21, die auf einen Planetenträger (nicht dargestellt) gelagert sind und einem Hohlrad 5, das zugleich Bestandteil einer Auskupplungsvorrichtung 4 ist. Das Hohlrad 5 weist auf seiner Umfangsseite 6 als Ausnehmungen aus einem Ring 17 ausgebildete Kupplungsmittel 7 auf, in die ein Gegenkupplungsmittel 8 federbeaufschlagt eingreift. Die Kupplungsmittel 7, 8 sind so aufeinander abgestimmt, dass sich im eingekuppelten Zustand eine drehspielfreie Kupplungsverbindung ergibt. Das Gegenkupplungsmittel 8 ist Teil einer Schwenkeinrichtung 23, bestehend aus einer Kupplungswelle 18, die an ihren beiden Endbereichen einerseits mit einem Zughebel 11 und andererseits mit dem Gegenkupplungsmittel 8 fest verbunden oder einstückig ist. Die Kupplungswelle 18 bildet, zusammen mit einer diese drehbar aufnehmende gehäusefesten Lagerung, ein Schwenkgelenk 15, wobei die Schwenkeinrichtung 23 aus Kupplungswelle 18, Zughebel 10 und Gegenkupplungsmittel 8 um eine Schwenkachse 19 schwenkbar ist. Die Kupplungswelle 18 weist gegenüber dem Gegenkupplungsmittel 8 ein Abstützmittel 24 auf, das von einer auf einen Aufnahmedorn 13 geführten Kupplungseinrückfeder 12 derart beaufschlagt ist, dass das Hohlrad 5 des Planetengetriebes 9 im Normalbetrieb gegen Verdrehung gesichert ist. Der Aufnahmedorn 13 weist einen Ansatz 14 auf, an dem sich die als Druckfeder ausgeführte Kupplungseinrückfeder 12 abstützt. Die Auskupplung der Auskupplungsvorrichtung 4 kann von Hand über einen Bowdenzug 10 vorgenommen werden (hier nur angedeutet).

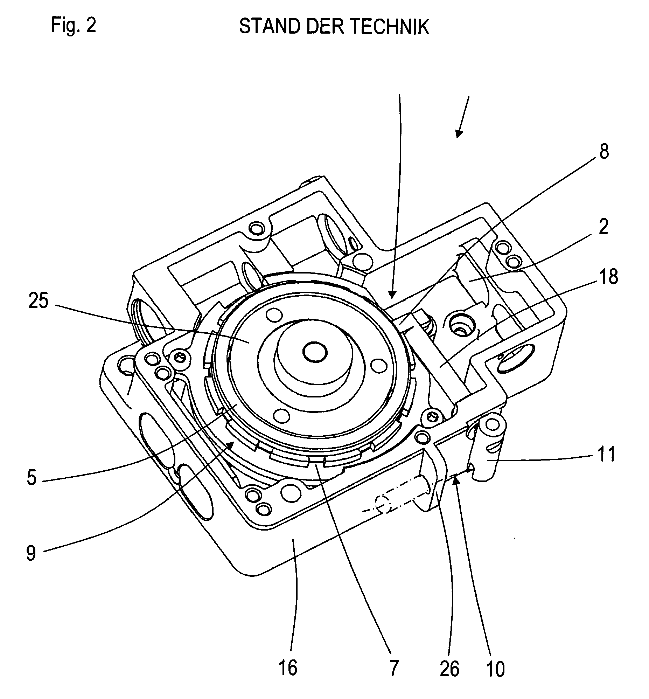

Fig. 2 zeigt einen Stellantrieb 1 nach dem Stand der Technik, mit einem Gehäuse 16 (geöffnet dargestellt) in dem das Planetengetriebe 9, mit dem Sonnenrad, Planetenrädern, einem Planetenträger 25 und dem Hohlrad 5, den an der Umfangsseite des Hohlrads angeordneten Kupplungsmitteln 7 als erstes Bestandteil der Auskupplungsvorrichtung 4, der Schwenkeinrichtung 23, bestehend aus dem Gegenkupplungsmittel 8, der Kupplungswelle 18, die im Gehäuse 16 gelagert ist und dem Zughebel 11, der mit dem Bowdenzug 10 in Wirkverbindung steht, angeordnet ist. Der Bowdenzug 10, der an einer Stütze 26 abgestützt ist, greift am Zughebel 11 an und schwenkt dadurch die Kupplungswelle und damit das Gegenkupplungsmittel 8 gegen die Kraft der Kupplungseinrückfeder 12 aus dem Kupplungsmittel 7. Um Spielfreiheit zu erreichen, könnten Kupplungsmittel 7 und Gegenkupplungsmittel trapezförmig ausgeführt sein, wobei dann durch die Federkraft der Kupplungseinrückfeder 12 stets für aneinander anliegende Kupplungsflächen gesorgt wird.

### Bisherige Funktionsweise nach dem Stand der Technik

Bei nicht betätigtem Bowdenzug, hält die Druckfeder 12 das Gegenrastmittel 8 mit einem der Rastmittel 7 spielfrei in Eingriff und bewirkt, dass das Hohlrad 5 quasi antriebsgehäusefest ist. Dadurch ist der Betrieb eines gewöhnlichen Stellantriebs, bestehend aus einem Elektromotor und einem Untersetzungsgetriebe zur Einstellung eines Stellglieds, z.B. eines Sitzelements möglich, wobei das Sonnenrad 20, die mit dem Hohlrad 5 in Eingriff stehenden Planetenräder 21 und damit den Planetenträger, der als Ausgang dieser Getriebestufe des Stellantriebs dient, antreibt. Wird der Bowdenzug betätigt, schwenkt der Zughebel 11 um die und das über die Kupplungswelle 18 mit dem Zughebel 11 verbundene Gegenkupplungsmittel 8 um die Schwenkachse 19, wobei das Gegenkupplungsmittel 8 aus dem Kupplungsmittel 7 seitlich herausschwenkt. Durch die Schwenkbewegung, wird der Aufnahmedorn 13 durch das Abstützmittel 24 in seiner Axialrichtung verschoben, wodurch die Druckfeder 12 über den Ansatz 14 zusammengedrückt und damit gespannt wird, so dass eine Einrückbewegung des Gegenkupplungsmittels bei entlastetem Bowdenzug selbsttätig erfolgt. Ggf. wird das Hohlrad erst nach einer Betätigung des Elektromotors verriegelt, sobald das Gegenkupplungsmittel 8 mit einem der Kupplungsmittel 7 in Übereinstimmung gebracht ist.

Im ausgekuppelten Zustand ist das Hohlrad 5 frei im Gehäuse drehbar. Eine vom Stellglied zurückwirkende Gegenkraft kann in diesem Zustand nicht mehr vom Hohlrad 5 aufgenommen werden, deshalb rollen die Planetenräder 21 bei manueller Betätigung des Stellglieds (z.B. Sitzelement) und damit angetriebenem Planetenträger auf dem Sonnenrad 20 ab und nehmen dabei das Hohlrad mit.

Der Bowdenzug dient dazu, eine manuelle Betätigung zu ermöglichen bzw. zu erleichtern.

Der Schutzumfang der Erfindung ist nicht auf das gezeigte Beispiel beschränkt, denn es sind eine Vielzahl von alternativen Ausführungsformen denkbar, auch mit unterschiedlicher Getriebe- und Kupplungsanordnung.

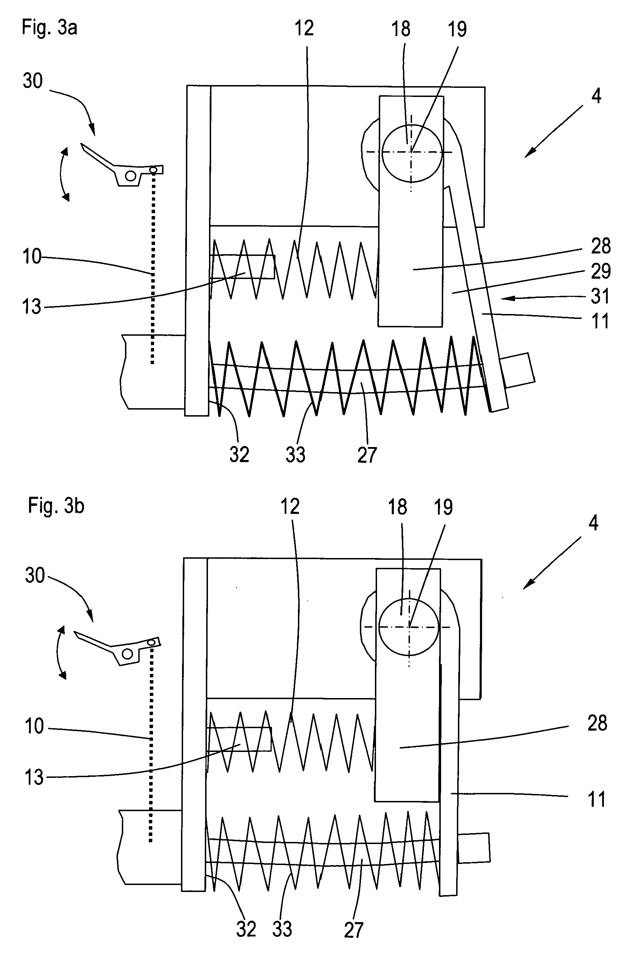

Fig. 3a zeigt eine schematische Darstellung einer erfindungsgemäßen Auskupplungsvorrichtung 4 in einem Normalbetriebszustand, in dem sich ein Betätigungsmittel 30 in seiner Normalstellung befindet und die Kupplung, die gemäß Stand der Technik ausgeführt sein kann, eingerastet ist. Das Betätigungsmittel 30 ist über ein Zugseil 27 eines Bowdenzuges 10 mit einem Zughebel 11 verbunden, wobei der Zughebel 11 durch eine Rückstellfeder 33, die vom Zugseil 27 geführt ist, in einer Ruhestellung befindet. Der Zughebel 11 ist um eine Schwenkachse 19 auf einer Kupplungswelle 18 der Auskupplungseinrichtung 4 schwenkbar gelagert. An der Kupplungswelle 18 ist ein Mitnahmehebel 28 starr befestigt. Die Kupplungswelle 18 ist mit dem Mitnahmehebel 28 um die Schwenkachse 19 schwenkbar gelagert. Die Lagerstellen, die hier nicht dargestellt sind, befinden sich in einem Gehäuse des Stellantriebs. Der Zughebel 11 ist gegenüber dem Mitnahmehebel 28 verschwenkbar. In Fig. 3a ist ein Freiraum 29 zwischen Zughebel 11 und Mitnahmehebel 28 dargestellt, der eine begrenzte freie Bewegung des Zughebels 11 ermöglicht, ohne den Einrückzustand von Kupplungsmitteln 7,8 der Auskupplungseinrichtung 4 zu ändern. Auf den Mitnahmehebel 28 wirkt eine auf einem Aufnahmedorn 13 aufgenommene Kupplungseinrückfeder 12, die sich an einer gehäusefesten Abstützfläche 32 abstützt. Das Betätigungsmittel 30 ist hier in Form eines handbetätigbaren Hebels ausgeführt. Bei Verwendung in einem Sitzversteller ist die das Betätigungsmittel beispielsweise im oberen Bereich der Sitzlehne angeordnet, um bei einem Stromausfall eine Sitzlehnenverstellung von Hand zu ermöglichen.

Fig. 3b zeigt eine schematische Darstellung der erfindungsgemäßen Auskupplungsvorrichtung in dem Zwischenzustand, in dem gerade der Freiraum 29 aus Fig. 3a überwunden und der tote Bewegungsspielraum aus der Anordnung herausgenommen ist. Bei weiterer Betätigung des Betätigungsmittels 30 wird sich der Mitnahmehebel 28 mitbewegen und mit ihm Gegenkupplungsmittel 8, wie aus der DE 102 30 591 A1 bekannt, beginnen aus den Kupplungsmitteln 7 auszukuppeln.

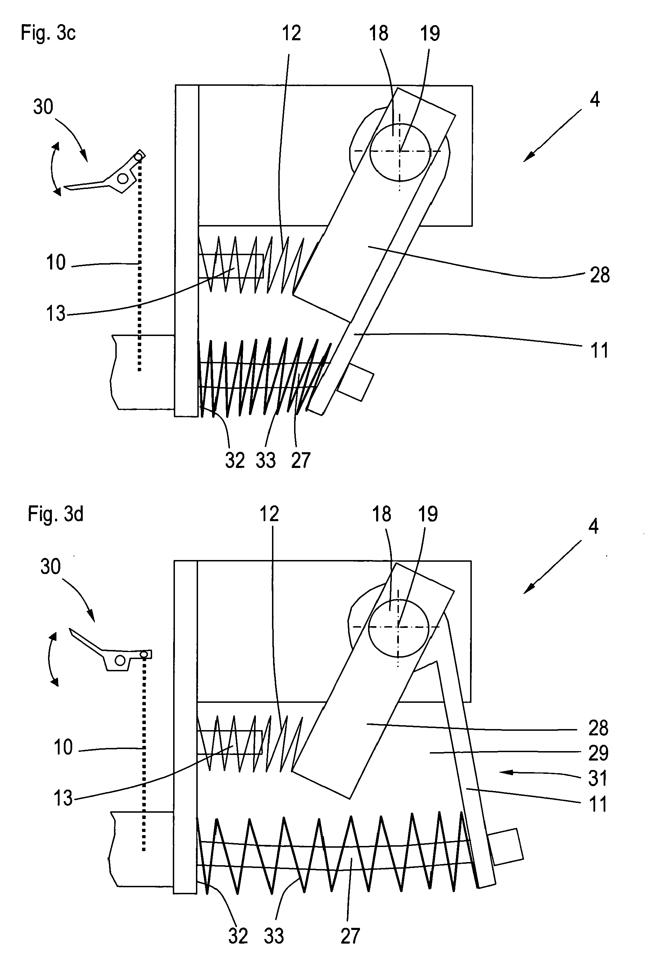

Diese Bewegung wird fortgesetzt bis der Endzustand der Fig. 3c erreicht ist, in dem das Betätigungsmittel 30 vollständig betätigt und der Auskupplungsvorgang abgeschlossen ist. In diesem Zustand kann das zu betätigende Element, z.B. eine Rückenlehne eines Kfz- oder Flugzeugsitzes von Hand in eine gewünschte Stellung gebracht werden. Während der Handverstellung bewegt sich bei dem Beispiel aus der DE 102 30 591 A1 (siehe Fig. 1 und Fig. 2) das Hohlrad in eine Zwischenstellung oder durch Zufall auch in eine Raststellung. Falls das Betätigungsmittel 30 in einer Zwischenstellung losgelassen wird, bleibt ein Zustand erhalten, wie er in Fig. 3d schematisch dargestellt ist.

In Fig. 3d ist die Kupplung ausgerückt, wobei der Mitnahmehebel 28 in einer Extremstellung verweilt, bis eine erneute motorische Betätigung erfolgt und eine Synchronisation der Kupplung bewirkt, während der Zughebel 11 durch die Rückstellfeder 33 wieder in seine Normalstellung zurückgeführt wurde. Der Freiraum 29 ist jetzt größer als im Normalzustand. Bei der Synchronisation wird die Bewegung des Mitnahmehebels 28 jedoch durch die Rastmittel 7, 8 (Fig. 1) begrenzt, so dass der Mitnahmehebel 28 dann von der Kupplungseinrückfeder 12 in eine Stellung gemäß Fig. 3a zurückgestellt wird.

Die die gezeigte schematische Darstellung stellt nur eines von vielen möglichen Varianten dar. Die Anordnung und Art der Kupplungseinrückfeder 12 und der Rückstellfeder 33 können variieren. Es ist auch möglich statt einer Schwenkeinrichtung eine Linearbewegungseinrichtung zu verwenden, um einerseits die Kupplung auszurücken und um einen Freiraum zwischen einem Zugmittel und einem Mitnahmemittel darzustellen.

### Bezugszeichenliste

- 1: Stellantrieb
- 2: Elektromotor
- 3: Untersetzungsgetriebe
- 4: Auskupplungsvorrichtung
- 5: Getriebeelement (Hohlrad)
- 6: Umfangsseite
- 7: Kupplungsmittel
- 8: Gegenkupplungsmittel
- 9: Planetengetriebe
- 10: Bowdenzug
- 11: Zughebel
- 12: Kupplungseinrückfeder
- 13: Aufnahmedorn
- 14: Ansatz
- 15: Schwenkgelenk
- 16: Gehäuse
- 17: Ring
- 18: Kupplungswelle
- 19: Schwenkachse
- 20: Sonnenrad
- 21: Planetenrad
- 22: Welle
- 23: Schwenkeinrichtung
- 24: Abstützmittel
- 25: Planetenträger
- 26: Stütze
- 27: Zugseil
- 28: Mitnahmehebel
- 29: Freiraum
- 30: Betätigungsmittel
- 31: Freibewegungseinrichtung
- 32: Abstützfläche
- 33: Rückstellfeder

## Patentansprüche

1. Stellantrieb (1), insbesondere für Sitzeinstelleinrichtungen, mit zumindest einem Elektromotor (2) mit nachgeordnetem Untersetzungsgetriebe (3) und einer Auskupplungsvorrichtung (4) für Handbetrieb, **dadurch gekennzeichnet, dass** die Auskupplungsvorrichtung (4) eine Kupplungseinrückfeder (12) aufweist, welche die Ausrastkraft der Auskupplungsvorrichtung (4) bestimmt und dass eine Rückstellfeder (33) vorgesehen ist, welche die Rückstellung eines Betätigungsmittels (30) bewirkt.

2. Stellantrieb nach Anspruch 1, **dadurch gekennzeichnet, dass** das Betätigungsmittel (30) über eine Freibewegungseinrichtung (31) mit der Auskupplungsvorrichtung (4) wirkverbunden ist.

3. Stellantrieb nach Anspruch 2, **dadurch gekennzeichnet, dass** die Freibewegungseinrichtung (31) eine Freischwenkeinrichtung ist.

4. Stellantrieb nach Anspruch 3, **dadurch gekennzeichnet, dass** die Freischwenkeinrichtung aus einem Zughebel (11) und einem Mitnahmehebel (28) besteht.

5. Stellantrieb nach Anspruch 4, **dadurch gekennzeichnet, dass** der Zughebel (11) und der Mitnahmehebel (28) um eine gemeinsame Schwenkachse(19) schwenkbar gelagert sind.

6. Stellantrieb nach Anspruch 5, **dadurch gekennzeichnet, dass** ein Zugseil (27) eines Bowdenzuges (10) einerseits mit dem Zughebel (11) und andererseits mit dem Betätigungsmittel (30) verbunden ist.

7. Stellantrieb nach Anspruch 6, **dadurch gekennzeichnet, dass** die Rückstellfeder (33) durch das Zugseil (27) des Bowdenzuges (10) geführt ist.

8. Stellantrieb nach Anspruch 6, **dadurch gekennzeichnet, dass** die Rückstellfeder (33) sich einerseits am Zughebel (11) und andererseits an einer gehäusefesten Abstützfläche (32) abstützt.

9. Stellantrieb nach einem der Ansprüche 5 bis 8, **dadurch gekennzeichnet, dass** ein Gegenkupplungsmittel (8) zu einem Kupplungsmittel (7) der Auskupplungsvorrichtung (4) um die Schwenkachse (19) schwenkbar gelagert ist.

10. Stellantrieb nach zumindest einem der vorangehenden Ansprüche, **dadurch gekennzeichnet, dass** sich die Kupplungseinrückfeder (12) einerseits am Mitnahmehebel (28) und andererseits an einer gehäusefesten Abstützfläche (32) abstützt.

11. Stellantrieb nach zumindest einem der Ansprüche 1 bis 9, **dadurch gekennzeichnet, dass** sich die Kupplungseinrückfeder (12) einerseits an einem über eine Kupplungswelle (18) mit dem Mitnahmehebel (28) verbundenen oder einstückigen Abstützmittel (24) und andererseits an einer Gehäusefesten Abstützfläche abstützt.

12. Stellantrieb nach zumindest einem der vorangehenden Ansprüche, **dadurch gekennzeichnet, dass** die Kupplungseinrückfeder (12) eine Druckfeder, eine Schenkelfeder oder eine Spiralfeder ist.

13. Stellantrieb nach zumindest einem der vorangehenden Ansprüche, **dadurch gekennzeichnet, dass** die Rückstellfeder (33) eine Druckfeder ist.
